# EUROPÄISCHE PATENTSCHRIFT

(11) **EP 3 805 553 B1**
(45) Veröffentlichungstag und Bekanntmachung des Hinweises auf die Patenterteilung: **07.06.2023**
(21) Anmeldenummer: 20199857.2
(22) Anmeldetag: 02.10.2020
(51) Int. Cl.: F03D 1/06, F03D 13/10

(54) **VERFAHREN ZUR MONTAGE VON ROTORBLÄTTERN EINER WINDENERGIEANLAGE**
METHOD AND DEVICE FOR INSTALLING ROTOR BLADES OF A WIND TURBINE
PROCÉDÉ DE MONTAGE DE PALES DE ROTOR D'UNE ÉOLIENNE

(30) Priorität: 08.10.2019 DE 102019126984
(43) Veröffentlichungstag der Anmeldung: 14.04.2021
(73) Patentinhaber: Wobben Properties GmbH, 26607 Aurich (DE)
(72) Erfinder: Siebelts, Stephan, 26427 Holtgast (DE); Ressel, Dirk, 26605 Aurich (DE)
(74) Vertreter: Eisenführ Speiser

(56) Entgegenhaltungen:
- WO-A1-2014/076825

## Beschreibung

Die vorliegende Erfindung betrifft ein Verfahren zur Montage von Rotorblättern einer Windenergieanlage und einen Montagearm.

Bei der Errichtung einer Windenergieanlage gestaltet sich die Montage der Rotorblätter an einer Rotornabe der Windenergieanlage als schwierig, insbesondere, wenn ungünstige Wetterbedingungen (wie beispielsweise Wind, Regen etc.) vorliegen. Dahergibt es Bestrebungen, die Montage von Rotorblättern einer Windenergieanlage zu verbessern.

WO 2003/012291 A1 betrifft ein Verfahren zur Montage von Rotorblättern an einer Rotornabe einer Windenergieanlage. Um bei der Montage der Rotorblätter hohe Drehmomente im mechanischen Strang der Windenergieanlage zu vermeiden, wird ein Gegengewicht an wenigstens einem Flansch der Rotornabe angebracht. Die Rotornabe wird in eine vorgebbare Position gedreht und das am Flansch der Rotornabe angeordnete Gegengewicht wird durch ein Rotorblatt ersetzt, indem das Gegengewicht demontiert und das Rotorblatt anschließend angebracht wird.

EP 1 597 477 B1 zeigt ein Verfahren zur Montage von Rotorblättern an einer Rotornabe einer Windenergieanlage. Hierzu wird die Rotornabe in eine vorgegebene erste Position (3-Uhr- oder 9-Uhr-Position) gedreht und ein erstes Rotorblatt wird an der Rotornabe befestigt. Die Rotornabe wird dann mithilfe des ersten Rotorblattes unter Zuhilfenahme der Schwerkraft des Rotorblattes in eine vorgegebene zweite Position gedreht, so dass das zweite Rotorblatt nach oben gezogen und an der Rotornabe in einer 3-Uhr- oder 9-Uhr-Position befestigt werden kann. Bevor das zweite Rotorblatt an der Nabe befestigt wird, wir die Gondel um 180 Grad gedreht. Die Rotornabe kann mithilfe des zweiten Rotorblattes in eine weitere vorgegebene Position gedreht werden. Die Gondel kann wiederum um 180 Grad gedreht werden und das dritte Rotorblatt kann befestigt werden.

Insbesondere bei großen Windenergieanlagen mit einer hohen Nabenhöhe und langen Rotorblättern kann es vorkommen, dass die zur Verfügung stehenden Kräne nicht ausreichen, um die Rotorblätter wie bislang zu befestigen.

In der prioritätsbegründenden deutschen Patentanmeldung hat das Deutsche Patent- und Markenamt die folgenden Dokumente recherchiert: US 2011/0185571 A1, DE 10 2015 008 610 B3, DE 10 2008 033 857 A1 und DE 201 09 835 U1. Weiterer Stand der Technik ist in WO 2014/076825 A1 offenbart.

Es ist daher eine Aufgabe der vorliegenden Erfindung, eine effektive Montage von Rotorblättern an einer Rotornabe der Windenergieanlage vorzusehen. Es ist insbesondere eine Aufgabe der vorliegenden Erfindung, eine Montage von Rotorblättern an einer Rotornabe der Windenergieanlage vorzusehen, wobei weniger Arbeitsschritte benötigt werden.

Diese Aufgabe wird durch ein Verfahren zur Montage von Rotorblättern einer Windenergieanlage gemäß Anspruch 1 sowie durch eine Verwendung eines Montagearms gemäß Anspruch 8 gelöst.

Gemäß der Erfindung wird vorgeschlagen, bei der Montage der Rotorblätter der Windenergieanlage einen Montagearm zu verwenden, der mehrstufig ausgestaltet ist und es erlaubt, dass mindestens zwei Abschnitte des Montagearms zueinander gedreht oder verschwenkt werden können. Der Montagearm weist einen ersten und zweiten Abschnitt sowie ein Gelenk zwischen dem ersten und zweiten Abschnitt auf, so dass der erste und zweite Abschnitt zueinander verschwenkbar angeordnet sind. Zur Montage der Rotorblätter wird der Montagearm an einem ersten Rotorblattanschluss der Rotornabe befestigt. Dies erfolgt, wenn der Rotorblattanschluss sich in einer 3-Uhr-Position (90°) oder 9-Uhr-Position (270°) befindet. Der Montagearm ist hierbei vorzugsweise gerade ausgestaltet. Anschließend wird die Rotornabe unter Zuhilfenahme des Montagearms gedreht, beispielsweise um 30 Grad, so dass ein zweiter Rotorblattanschluss sich in der 9-Uhr- oder 3-Uhr-Position (270°, 90°) befindet, was eine im Wesentlichen waagerechte Montage des ersten Rotorblatts ermöglicht. Nach der Drehung der Rotornabe unter Zuhilfenahme des Montagearms kann der Winkel zwischen dem ersten und zweiten Abschnitt des Montagearms verstellt werden, so dass damit auch der Schwerpunkt des Montagearms verändert wird. Das erste Rotorblatt kann beispielsweise mittels einer Rotorblatttraverse an dem zweiten Rotorblattanschluss befestigt werden, welcher sich in der 3-Uhr- oder 9-Uhr-Position (90°, 270°) befindet. Anschließend kann der Montagearm beispielsweise unter Zuhilfenahme der Rotorblatttraverse angehoben werden, so dass sich die Rotornabe so dreht, dass ein dritter Rotorblattanschluss sich in der 9-Uhr- oder 3-Uhr-Position (270°, 90°) befindet und ein zweites Rotorblatt wiederum mittels der Rotorblatttraverse an dem dritten Rotorblattanschluss montiert werden kann, wobei das zweite Rotorblatt mittels der Rotorblatttraverse im Wesentlichen waagerecht nach oben gezogen werden kann.

Anschließend wird die Rotornabe weitergedreht, bis der erste Rotorblattanschluss sich in der 3-Uhr- oder 9-Uhr-Position (90°, 270°) befindet. Dies erfolgt unter Zuhilfenahme des Montagearms sowie beispielsweise der Rotorblatttraverse, welche an dem Montagearm befestigt ist. Anschließend wird der Montagearm entfernt und das dritte Rotorblatt an dem ersten Rotorblattanschluss montiert.

Die Erfindung betrifft ebenfalls eine Verwendung eines Montagearms zur Montage von Rotorblättern einer Windenergieanlage gemäß Anspruch 8.

Gemäß einem Aspekt der vorliegenden Erfindung ist die Länge des zweiten Abschnitts größer als die Länge des ersten Abschnitts.

Gemäß einem weiteren Aspekt der vorliegenden Erfindung erlaubt das Gelenk bzw. das Drehlager mindestens zwei Positionen.

Gemäß einem weiteren Aspekt der vorliegenden Erfindung weist der zweite Abschnitt des Montagearms Aufnahmekulissen zur Aufnahme der Rotorblatttraverse auf.

Gemäß einem weiteren Aspekt der vorliegenden Erfindung ist der erste und/oder zweite Abschnitt des Montagearms von innen begehbar.

Gemäß einem weiteren Aspekt der vorliegenden Erfindung ist das Gelenk des Montagearms hydraulisch oder elektrisch verstellbar.

Die vorliegende Erfindung ist insbesondere relevant bei der Montage einer getriebelosen Windenergieanlage.

Mithilfe des Montagearms kann die Rotornabe montiert werden. Hierzu muss der Montagearm an einen Rotorblattanschluss montiert sein und der Montagearm zusammen mit der Nabe kann dann mittels eines Kranseiles nach oben gezogen werden, so dass die Nabe an der Gondel der Windenergieanlage montiert werden kann. Durch die mehrstufige Ausgestaltung des Montagearmes und durch das Gelenk des Montagearmes, welches mehrere Positionen verfügen kann, kann eine Montage der Rotorblätter der Windenergieanlage mit weniger Hüben des Krans erfolgen. Mit dem erfindungsgemäßen Montagearm können alle drei Rotorblätter im Wesentlichen in einer horizontalen Lage montiert werden.

Ferner ist kein Axialsicherungsseil bei der Montage der Rotorblätter erforderlich. Bei der Montage der Rotorblätter kann der erfindungsgemäße Montagearm dazu verwendet werden, die Nabe aufgrund seines Eigengewichts sowie der Drehmomente zu drehen.

Weitere Ausgestaltungen der Erfindung sind Gegenstand der Unteransprüche.
- Fig. 1: zeigt eine schematische Darstellung einer Windenergieanlage gemäß der Erfindung,
- Figs. 2A - 2N: zeigen jeweils verschiedene Schritte bei der Montage der Rotorblätter der Windenergieanlage von Fig. 1 gemäß einem ersten Ausführungsbeispiel, und
- Figs. 3A - 3L: zeigen jeweils eine schematische Darstellung einer Windenergieanlage bei einer Montage von Rotorblättern gemäß einem zweiten Ausführungsbeispiel.

Gemäß der Erfindung können Positionen des aerodynamischen Rotors 106 anhand eines Uhr-Zifferblattes oder anhand von Winkelangaben beschrieben werden. 0° entspricht dabei einer 12-Uhr-Position. 90° entspricht einer 3-Uhr-Position, 180° entspricht einer 6-Uhr-Position und 270° entspricht einer 9-Uhr-Position.

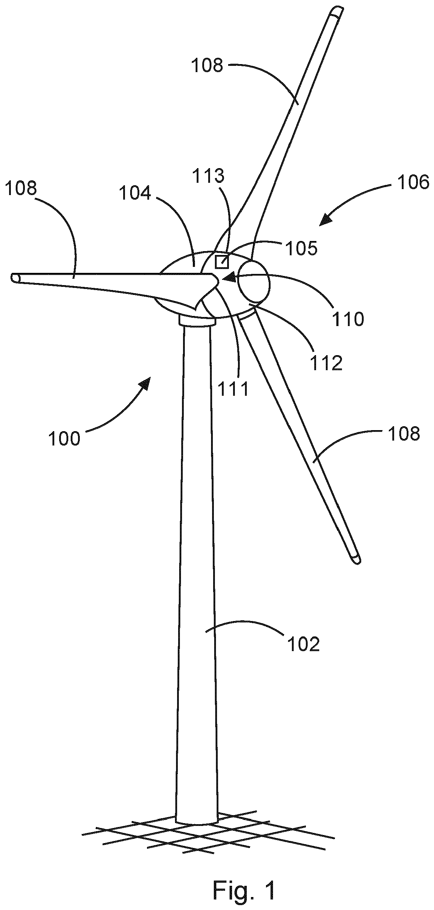

Fig. 1 zeigt eine schematische Darstellung einer Windenergieanlage gemäß der Erfindung. In Fig. 1 ist eine Windenergieanlage 100 mit einem Turm 102, einer Gondel 104 und einem aerodynamischen Rotor 106 gezeigt. Der aerodynamische Rotor 106 weist eine Rotornabe 110 mit drei Rotorblättern 108 auf. Die Rotornabe 110 weist drei Rotorblattanschlüsse 111, 112, 113 auf. Die drei Rotorblätter 108 sind jeweils an den drei Rotorblattanschlüssen 111-113 montiert. Der Anstellwinkel bzw. Pitchwinkel der drei Rotorblätter 108 ist vorzugsweise verstellbar. Dazu kann im Bereich des Rotorblattanschlusses jeweils ein Pitchmotor vorgesehen sein.

Die Windenergieanlage weist einen elektrischen Generator 105 auf. Ein Rotor des Generators 105 ist mit dem aerodynamischen Rotor 106 direkt oder indirekt gekoppelt, so dass bei einer Drehung des aerodynamischen Rotors 106 auch der Rotor des Generators 105 rotiert und der Generator 105 dadurch eine elektrische Energie erzeugt.

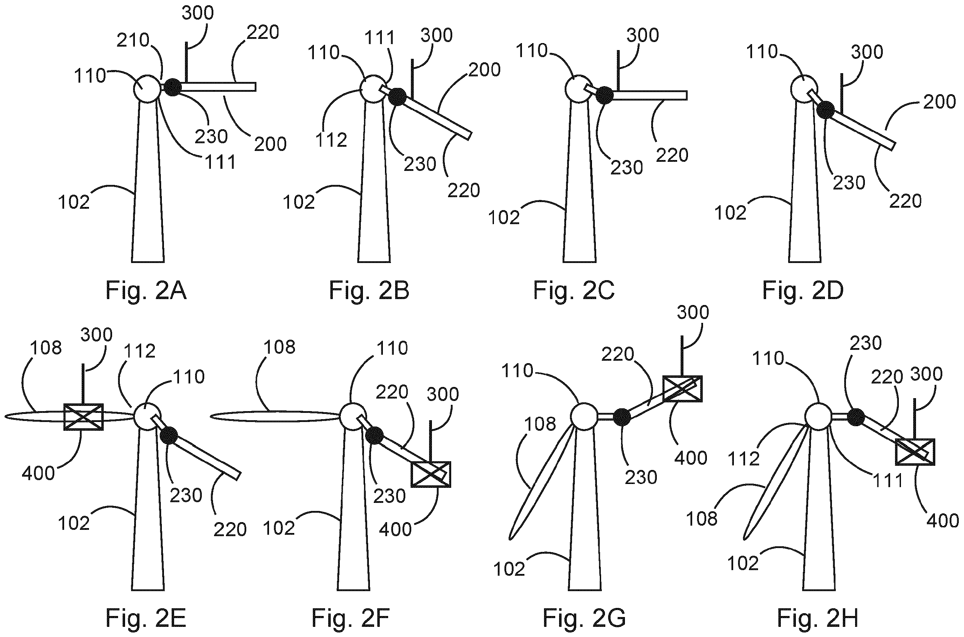

Figs. 2A-2N zeigen jeweils verschiedene Schritte bei der Montage der Rotorblätter der Windenergieanlage von Fig. 1 gemäß einem ersten Ausführungsbeispiel. In Fig. 2A ist ein erster Schritt S1 bei der Montage von Rotorblättern einer Windenergieanlage gemäß einem ersten Ausführungsbeispiel gezeigt. Eine Nabe 110 der Windenergieanlage 100 weist an ihrem ersten Rotorblattanschluss 111 einen Montagearm 200 auf. Der Montagearm 200 kann an dem ersten Rotorblattanschluss 111 der Rotornabe 110 montiert werden, während sich die Nabe 110 am Boden befindet. Alternativ dazu kann der Montagearm 200 auch montiert werden, wenn die Nabe 110 bereits montiert ist.

Daher kann die Nabe 110 optional mittels des Montagearms 200 vom Boden nach oben gezogen und montiert werden. Dies kann beispielsweise mittels eines Kranseiles 300 erfolgen.

Der Montagearm 200 weist mindestens einen ersten und zweiten Abschnitt 210, 220 sowie ein Gelenk 230 zwischen dem ersten und zweiten Abschnitt 210, 220 auf. Der Montagearm 200 ist an dem ersten Rotorblattanschluss 111 befestigt, welcher sich in der 3-Uhr- oder 9-Uhr-Position (bzw. 90° oder 270°) befindet. In Schritt S2 (Fig. 2B) wird die Rotornabe 110 beispielsweise um +/- 30 Grad unter Zuhilfenahme des Montagearms 200 gedreht, so dass ein zweiter Rotorblattanschluss 112 sich im Wesentlichen in der 9-Uhr- oder 3-Uhr-Position (bzw. 270° oder 90°) befindet.

Das Drehen der Rotornabe 110 kann unter Zuhilfenahme des Montagearms 200 und insbesondere des Gewichts des Montagearms 200 erfolgen. Während des ersten und zweiten Schrittes S1, S2 ist der Montagearm 200 bzw. der erste und zweite Abschnitt 210, 220 im Wesentlichen gerade ausgerichtet. Das Drehgelenk 230 befindet sich somit in einer ersten Position. In Schritt S3 (Fig. 2C) wird das Gelenk 230 und der zweite Abschnitt 220 gedreht, so dass das Gelenk 230 sich in einer zweiten Position befindet. Hierbei ist der zweite Abschnitt 220 im Wesentlichen waagerecht angeordnet. Das Verstellen des zweiten Abschnitts 220 erfolgt optional unter Zuhilfenahme des Krankseiles 300.

In Schritt S4 (Fig. 2D) wird die Nabe 110 durch Absenken des Montagearms 200 weitergedreht, so dass sich der zweite Rotorblattanschluss 112 im Wesentlichen in der 3-Uhr-Position befindet.

In Schritt S5 (Fig. 2E) wird ein erstes Rotorblatt 108 mittels einer Rotorblatttraverse 400 und dem Kranseil 300 an dem zweiten Rotorblattanschluss 112 befestigt. Das erste Rotorblatt 108 wird hierbei mittels der Traverse 400 im Wesentlichen waagerecht nach oben gezogen und an dem zweiten Rotorblattanschluss 112 befestigt. In Schritt S6 (Fig. 2F) wird die Rotorblatttraverse 400 an dem zweiten Abschnitt 220 des Montagearms 200 befestigt. In Schritt S7 (Fig. 2G) wird der zweite Abschnitt 220 des Montagearms 200 um 60 Grad nach oben gezogen, und zwar mittels der Rotorblatttraverse 400 und dem Kranseil 300. In Schritt S8 (Fig. 2H) wird das Gelenk 230 gelöst und der zweite Abschnitt 220 wird um 60 Grad nach unten mittels der Traverse 400 und dem Kranseil 300 abgelassen.

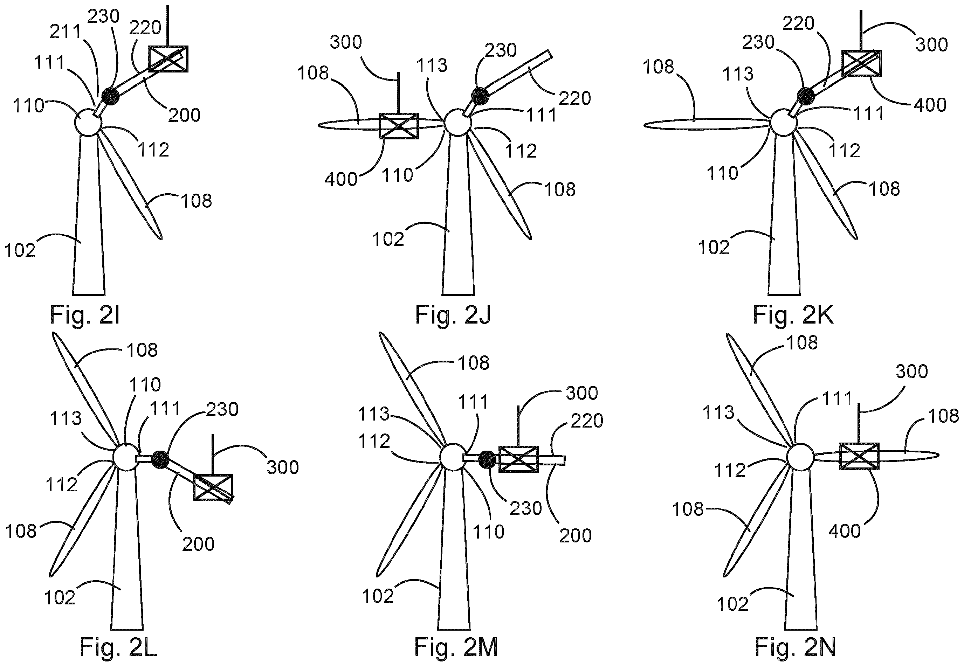

In Schritt S9 (Fig. 2I) wird die Rotornabe 110 durch Hochziehen des Montagearms 200 gedreht. Hierbei wird der erste Rotorblattanschluss 111 von der 3-Uhr-Position in eine 1-Uhr-Position gedreht, so dass der zweite Rotorblattanschluss 112 sich in einer 4-Uhr-Position befindet und der dritte Rotorblattanschluss 113 sich in einer 9-Uhr-Position befindet. In Schritt S10 (Fig. 2J) wird ein zweites Rotorblatt 108 mittels der Rotorblatttraverse 400 und dem Kranseil 300 an dem dritten Rotorblattanschluss 113 montiert. In Schritt S11 (Fig. 2K) greift die Rotorblatttraverse 400 in oder an den zweiten Abschnitt 220 an. In Schritt S12 (Fig. 2L) wird die Nabe 110 mittels des Montagearms 200 gedreht, so dass sich der erste Rotorblattanschluss 111 in der 3-Uhr-Position befindet. In Schritt S12 (Fig. 2M) wird das Gelenk 230 gelöst und der zweite Abschnitt 220 des Montagearms 200 wird um 30 Grad nach oben gezogen, so dass der erste und zweite Abschnitt 210, 220 gerade ausgestaltet sind.

In Schritt S14 (Fig. 2N) wird der Montagearm 200 demontiert und ein drittes Rotorblatt 108 wird mittels der Rotorblatttraverse 400 und dem Kranseil 300 an dem ersten Rotorblattanschluss 111 montiert, so dass alle drei Rotorblätter 108 montiert sind.

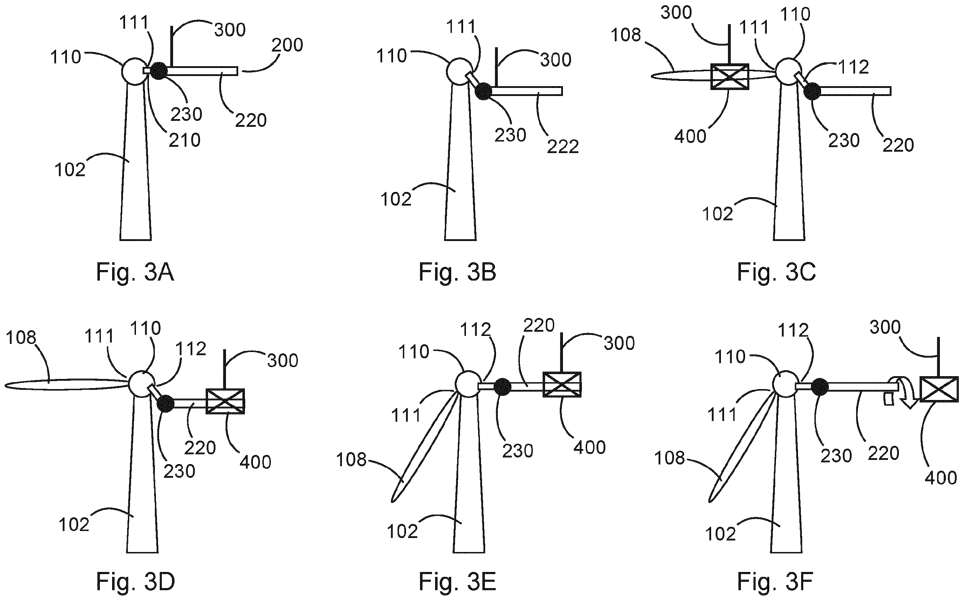

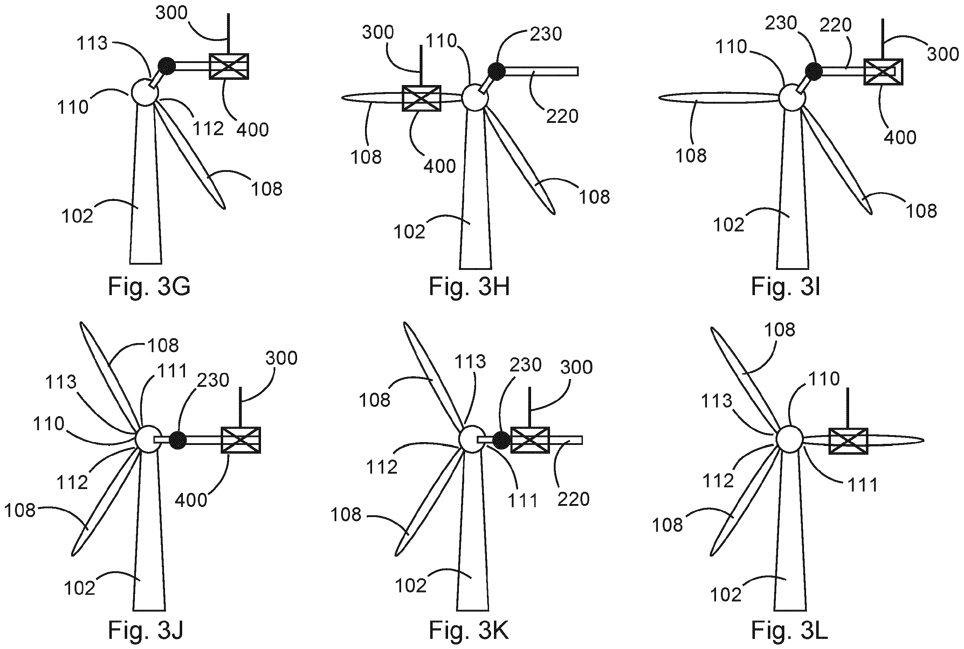

Figs. 3A-3L zeigen jeweils eine schematische Darstellung einer Windenergieanlage bei einer Montage der Rotorblätter der Windenergieanlage gemäß einem zweiten Ausführungsbeispiel. In Schritt S101 (Fig. 3A) wird ein Montagearm 200 an einem ersten Rotorblattanschluss 111 der Nabe 110 mittels eines Kranseils 300 montiert. Der Montagearm 200 gemäß dem zweiten Ausführungsbeispiel kann dem Montagearm 200 gemäß dem ersten Ausführungsbeispiel entsprechen. Der Montagearm 200 weist mindestens einen ersten und zweiten Abschnitt 210, 220 sowie ein Gelenk 230 zwischen dem ersten und zweiten Abschnitt 210, 220 auf. Der erste Abschnitt 210 weist ein erstes und zweites Ende 211, 212 auf, wobei das erste Ende 211 an einen Rotorblattanschluss, hier den ersten Rotorblattanschluss 111, montierbar ist. Das zweite Ende 212 des ersten Abschnitts 210 ist an das Gelenk 230 gekoppelt bzw. damit befestigt. Der zweite Abschnitt 220 weist ein erstes Ende 221 auf, welches an dem Gelenk 230 befestigt ist. Das Gelenk 230 ist arretierbar und kann mehrere Positionen ermöglichen, so dass der Winkel zwischen dem ersten und zweiten Abschnitt 210, 220 einstellbar ist. Gemäß dem zweiten Ausführungsbeispiel weist das Gelenk 230 einen Antrieb 231 auf, mittels welchem ein Winkel zwischen dem ersten und zweiten Abschnitt 210, 220 einstellbar ist. Optional kann das Gelenk 230 dazu ausgestaltet sein, den zweiten Abschnitt 220 entlang seiner Längsachse zu drehen. In Schritt S102 (Fig. 3B) wird der Winkel zwischen dem ersten und zweiten Abschnitt 210, 220 derart eingestellt, dass sich der zweite Abschnitt 220 des Montagearms 200 im Wesentlichen waagerecht befindet. Durch das Drehen der Nabe 110 befindet sich der zweite Rotorblattanschluss 112 in der 9-Uhr-Position. In Schritt S103 (Fig. 3C) kann ein erstes Rotorblatt 108 mittels der Rotorblatttraverse 400 und dem Kranseil 300 an dem zweiten Rotorblattanschluss 112 montiert werden. In Schritt S104 (Fig. 3D) wird die Rotorblatttraverse 400 von dem montierten ersten Rotorblatt 108 gelöst und an dem zweiten Abschnitt 220 des Montagearms 200 befestigt. In Schritt S105 (Fig. 3E) wird der Montagearm gerade ausgerichtet und die Rotornabe 110 wird um 30 Grad gedreht. In Schritt S106 (Fig. 3F) wird die Rotorblatttraverse 400 gelöst und der Montagearm kann mittels des Pitchantriebs um 180 Grad gedreht werden.

In Schritt S107 (Fig. 3G) wird der Winkel zwischen dem ersten und zweiten Abschnitt 210, 220 des Montagearms 200 gedreht, so dass sich der erste Rotorblattanschluss 111 in einer 1-Uhr-Position befindet und der zweite Abschnitt 220 im Wesentlichen waagerecht ausgestaltet ist. In Schritt S108 (Fig. 3H) wird ein zweites Rotorblatt 108 mittels der Rotorblatttraverse 400 und dem Kranseil 300 in einer 9-Uhr-Position montiert. In Schritt S109 (Fig. 3I) wird die Rotorblatttraverse 400 von dem montierten zweiten Rotorblatt 108 entfernt und an dem zweiten Abschnitt 220 des Montagearms 200 befestigt. In Schritt S110 (Fig. 3J) wird die Rotornabe 110 gedreht, indem der Montagearm 200 gerade ausgerichtet wird und die Rotorblatttraverse 400 mit dem befestigten zweiten Abschnitt 220 des Montagearms 200 um 60° nach unten abgelassen wird. In Schritt S111 (Fig. 3K) wird der Montagearm 200 mittels der Rotorblatttraverse 400 und dem Kranseil 300 demontiert und ein drittes Rotorblatt 108 kann im Schritt S112 an den ersten Rotorblattanschluss 111 mittels der Rotorblatttraverse 400 und dem Kranseil 300 montiert werden. Damit sind alle drei Rotorblätter 108 montiert.

Der Montagearm ist mehrstufig ausgestaltet und kann aus einer Stahlkonstruktion bestehen. Ein erstes Ende des ersten Abschnitts des Montagearms kann an einem Rotorblattflanschlager der Nabe angeschraubt werden. Vorzugsweise weist der Montagearm im Gesamtschwerpunkt mit angeschraubter Rotornabe Anschlagpunkte, welche dazu dienen, die Nabe an der Windenergieanlage zu montieren, auf. Damit kann die Rotornabe mittels des Montagearms montiert werden. Im Bereich des zweiten Abschnitts des Montagearms kann eine Aufnahmekulisse vorgesehen sein, um mit einer Rotorblatttraverse verbunden zu werden. Optional kann der mehrstufige Montagearm von innen begehbar sein, um das Verbinden mit der Rotorblatttraverse steuern zu können. Der Montagearm sowie optional die Rotorblatttraverse kann ein Gewicht aufweisen, mittels welchem die Rotornabe unter Zuhilfenahme der Schwerkraft gedreht werden kann.

Das Gelenk in dem Montagearm dient dazu, den Hebelarm und eine Verminderung der Kranlasten sowie der erforderlichen Hubhöhe zu verringern. Das Gelenk kann in mindestens drei Positionen arretiert werden.

Die Rotorblatttraverse gemäß der Erfindung kann eine Neigefunktion um beispielsweise +/- 30 Grad aufweisen. Durch die Neigefunktion der Traverse kann eine Montage der Rotorblätter verbessert werden, die in den Figuren 2F, 2G, 2H, 2I, 2K und 2L ermöglicht wird. Bei dem antreibbaren Gelenk gemäß dem zweiten Ausführungsbeispiel wird keine Rotorblatttraverse mit einer Neigefunktion benötigt, da dies durch das antreibbare Gelenk ausgeglichen werden kann.

## Patentansprüche

1. Verfahren zur Montage von Rotorblättern (108) einer Windenergieanlage (100), wobei die Windenergieanlage (100) eine Rotornabe (110) mit drei Rotorblattanschlüssen (111-113) aufweist, an welchen jeweils ein Rotorblatt (108) zu montieren ist, mit den Schritten Drehen der Rotornabe (110) bis sich der erste Rotorblattanschluss (111) in einer 90°-Position oder einer 270°-Position befindet,
Befestigen eines ersten Endes (211) eines ersten Abschnitts (210) eines Montagearmes (200) an dem ersten Rotorblattanschluss (111), wobei der Montagearm (200) den ersten Abschnitt (210) und einen zweiten Abschnitt (220) aufweist, welche über ein Gelenk (230) miteinander gekoppelt sind, so dass der Winkel zwischen dem ersten und zweiten Abschnitt (210, 220) variierbar ist,
Drehen der Rotornabe (110) unter Zuhilfenahme des Montagearms (200), bis der zweite Rotorblattanschluss (112) sich in einer 270°-Position oder einer 90°-Position befindet,
wobei beim Drehen der Rotornabe (110) der Winkel zwischen dem ersten und zweiten Abschnitt (210, 220) des Montagearms (200) variiert wird,
waagerechtes Anheben eines ersten Rotorblattes (108), insbesondere mittels einer Rotorblatttraverse (400) und eines Kranseils (300), so dass eine waagerechte Montage des ersten Rotorblattes (108) an dem zweiten Rotorblattanschluss (112) der Rotornabe (110) erfolgt,
Drehen der Rotornabe (110) unter Zuhilfenahme des Montagearms (200), bis der dritte Rotorblattanschluss (113) sich in einer 270°-Position oder einer 90°-Position befindet,
Montieren des zweiten Rotorblatts (108) an den dritten Rotorblattanschluss (113), insbesondere unter Zuhilfenahme einer Rotorblatttraverse (400) und des Kranseils (300),
Drehen der Rotornabe (110) unter Zuhilfenahme des Montagearms (200), bis der erste Rotorblattanschluss (111) sich in der 90°-Position oder der 270°-Position befindet, Demontieren des Montagearms (200) von dem ersten Rotorblattanschluss (111),
Montieren eines dritten Rotorblatts (108), insbesondere unter Zuhilfenahme der Rotorblatttraverse (400) und des Kranseils (300), an dem ersten Rotorblattanschluss (111),
wobei der Winkel zwischen dem ersten und zweiten Abschnitt (210, 220) des Montagearms (200) durch das Drehgelenk (230) variiert wird.

2. Verfahren zur Montage von Rotorblättern (108) einer Windenergieanlage (100) nach Anspruch 1, wobei
das Drehgelenk (230) in mindestens drei Positionen drehbar und arretierbar ist.

3. Verfahren zur Montage von Rotorblättern (108) einer Windenergieanlage (100) nach Anspruch 1, wobei
das Drehgelenk (230) elektrisch oder hydraulisch antreibbar ist und das Drehgelenk (230) an mindestens drei Positionen arretierbar ist.

4. Verfahren zur Montage von Rotorblättern (108) einer Windenergieanlage (100) nach Anspruch 1 oder 2, wobei
der Montagearm (200) nach Befestigung an dem ersten Rotorblattanschluss (111) und vor Montage des ersten Rotorblattes (108) an den zweiten Rotorblattanschluss (112) zweimal variiert wird.

5. Verfahren zur Montage von Rotorblättern (108) einer Windenergieanlage (100) nach einem der Ansprüche 1 bis 4, wobei
der Winkel zwischen dem ersten und zweiten Abschnitt (210, 220) des Montagearms (200) einmal variiert wird.

6. Verfahren zur Montage von Rotorblättern (108) einer Windenergieanlage (100) nach einem der Ansprüche 1 bis 5, wobei
der Winkel zwischen dem ersten und zweiten Abschnitt (210, 220) des Montagearms (200) nach Montage des zweiten Rotorblattes (108) an dem dritten Rotorblattanschluss (113) mindestens einmal variiert wird.

7. Verfahren zur Montage von Rotorblättern (108) einer Windenergieanlage (100) nach einem der Ansprüche 1 bis 3, wobei
ein Winkel zwischen einem ersten und zweiten Abschnitt (210, 220) des Montagearms (200) während des Drehens der Rotornabe (110) unter Zuhilfenahme des Montagearms (200) und insbesondere einer Rotorblatttraverse (400) geändert wird.

8. Verwendung eines Montagearms (200) zur Montage von Rotorblättern (108) einer Windenergieanlage (100) an einer Rotornabe (110) mit drei Rotorblattanschlüssen (111-113), mit
einem ersten und zweiten Abschnitt (210, 220), welche durch ein Drehgelenk (230) miteinander drehbar verbunden sind,
wobei der erste Abschnitt (210) ein erstes und zweites Ende (211, 212) aufweist, wobei das erste Ende (211) an einem Rotorblattanschluss (111-113) einer Rotornabe (110) einer Windenergieanlage (100) befestigbar ist,
wobei ein zweites Ende (212) des ersten Abschnitts (210) an dem Drehgelenk (230) befestigbar ist,
wobei das Gelenk (230) in mindestens drei Positionen arretierbar ist,
wobei die Rotornabe (110) gedreht wird, bis sich der erste Rotorblattanschluss (111) in einer 90°-Position oder einer 270°-Position befindet,
wobei das erste Ende (211) des Montagearms (200) an dem ersten Rotorblattanschluss (111) befestigt wird,
wobei die Rotornabe (110) unter Zuhilfenahme des Montagearms (200) gedreht wird, bis der zweite Rotorblattanschluss (112) sich in einer 270°-Position oder einer 90°-Position befindet,
wobei beim Drehen der Rotornabe (110) der Winkel zwischen dem ersten und zweiten Abschnitt (210, 220) des Montagearms (200) variiert wird,
wobei ein erstes Rotorblatt (108) waagerecht angehoben wird, insbesondere mittels einer Rotorblatttraverse (400) und einem Kranseil (300), so dass eine waagerechte Montage des ersten Rotorblattes (108) an dem zweiten Rotorblattanschluss (112) der Rotornabe (110) erfolgt,
wobei die Rotornabe (110) unter Zuhilfenahme des Montagearms (200) gedreht wird, bis der dritte Rotorblattanschluss (113) sich in einer 270°-Position oder einer 90°-Position befindet,
wobei das zweite Rotorblatt (108) an den dritten Rotorblattanschluss (113), insbesondere unter Zuhilfenahme einer Rotorblatttraverse (400) und des Kranseils (300), montiert wird,
wobei die Rotornabe (110) unter Zuhilfenahme des Montagearms (200) gedreht wird, bis der erste Rotorblattanschluss (111) sich in der 90°-Position oder der 270°-Position befindet,
wobei der Montagearm (200) von dem ersten Rotorblattanschluss (111) demontiert wird,
wobei ein drittes Rotorblatt (108), insbesondere unter Zuhilfenahme der Rotorblatttraverse (400) und des Kranseils (300), an dem ersten Rotorblattanschluss (111) montiert wird,
wobei der Winkel zwischen dem ersten und zweiten Abschnitt (210, 220) des Montagearms (200) durch das Drehgelenk (230) variiert wird.

9. Verwendung eines Montagearms (200) nach Anspruch 8, wobei das Gelenk (230) elektrisch oder hydraulisch verstellbar ist.

10. Verwendung eines Montagearms (200) nach Anspruch 8 oder 9, wobei der erste und zweite Abschnitt (210, 220) des Montagearms (200) von innen begehbar ist.

## Claims

1. A method for mounting rotor blades (108) of a wind turbine (100), wherein the wind turbine (100) has a rotor hub (110) with three rotor blade ports (111-113), on which a respective rotor blade (108) is to be mounted, with the following steps:
turning the rotor hub (110) until the first rotor blade port (111) is in a 90° or in a 270° position,
fastening a first end (211) of a first section (210) of a mounting arm (200) to the first rotor blade port (111), wherein the mounting arm (200) has the first section (210) and a second section (220), which are coupled with each other via a hinge (230), so that the angle between the first and second sections (210, 220) can be varied,
turning the rotor hub (110) with the help of the mounting arm (200), until the second rotor blade port (112) is in a 270° or in a 90° position,
wherein the angle between the first and second sections (210, 220) of the mounting arm (200) is varied while turning the rotor hub (110),
horizontally lifting a first rotor blade (108), in particular by means of a rotor blade traverse (400) and a crane rope (300), so that the first rotor blade (108) is horizontally mounted to the second rotor blade port (112) of the rotor hub (110),
turning the rotor hub (110) with the help of the mounting arm (200), until the third rotor blade port (113) is in a 270° or in a 90° position,
mounting the second rotor blade (108) to the third rotor blade port (113), in particular with the help of a rotor blade traverse (400) and the crane rope (300),
turning the rotor hub (110) with the help of the mounting arm (200), until the first rotor blade port (111) is in the 90° or in the 270° position,
demounting the mounting arm (200) from the first rotor blade port (111),
mounting a third rotor blade (108) to the first rotor blade port (111), in particular with the help of the rotor blade traverse (400) and the crane rope (300),
wherein the angle between the first and second sections (210, 220) of the mounting arm (200) is varied by the swivel hinge (230).

2. The method for mounting rotor blades (108) of a wind turbine (100) according to claim 1, wherein
the swivel hinge (230) can be turned and locked in at least three positions.

3. The method for mounting rotor blades (108) of a wind turbine (100) according to claim 1, wherein
the swivel hinge (230) can be electrically or hydraulically driven, and the swivel hinge (230) can be locked in at least three positions.

4. The method for mounting rotor blades (108) of a wind turbine (100) according to claim 1 or 2, wherein
the mounting arm (200) is varied twice after fastened to the first rotor blade port (111) and before mounting the first rotor blade (108) to the second rotor blade port (112).

5. The method for mounting rotor blades (108) of a wind turbine (100) according to one of claims 1 to 4, wherein
the angle between the first and second sections (210, 220) of the mounting arm (200) is varied once.

6. The method for mounting rotor blades (108) of a wind turbine (100) according to one of claims 1 to 5, wherein
the angle between the first and second sections (210, 220) of the mounting arm (200) is varied at least once after mounting the second rotor blade (108) to the third rotor blade port (113).

7. The method for mounting rotor blades (108) of a wind turbine (100) according to one of claims 1 to 3, wherein
an angle between the first and second sections (210, 220) of the mounting arm (200) is changed while turning the rotor hub (110) with the help of the mounting arm (200), and in particular of a rotor blade traverse (400).

8. Use of a mounting arm (200) for mounting rotor blades (108) of a wind turbine (100) to a rotor hub (110) with three rotor blade ports (111 - 113), with
a first and second section (210, 220), which are rotatably connected with each other by a swivel hinge (230),
wherein the first section (210) has a first and second end (211, 212), wherein the first end (211) can be fastened to a rotor blade port (111-113) of a rotor hub (110) of a wind turbine (100),
wherein a second end (212) of the first section (210) can be fastened to a swivel hinge (230),
wherein the hinge (230) can be locked in at least three positions,
wherein the hub (110) is turned until the first rotor blade port (111) is in a 90° or 270° position,
wherein the first end (211) of the mounting arm (200) is fastened to the first rotor blade port (111),
wherein the rotor hub (110) is turned with the help of the mounting arm (200), until the second rotor blade port (112) is in a 270° or 90° position,
wherein the angle between the first and second sections (210, 220) of the mounting arm (200) is varied while turning the rotor hub (110),
wherein a first rotor blade (108) is horizontally lifted, in particular by means of a rotor blade traverse (400) and a crane rope (300), so that the first rotor blade (108) is horizontally mounted to the second rotor blade port (112) of the rotor hub (110),
wherein the rotor hub (110) is turned with the help of the mounting arm (200), until the third rotor blade port (113) is in a 270° or a 90° position,
wherein the second rotor blade (108) is mounted to the third rotor blade port (113), in particular with the help of a rotor blade traverse (400) and the crane rope (300),
wherein the rotor hub (110) is turned with the help of the mounting arm (200), until the first rotor blade port (111) is in the 90° or the 270° position,
wherein the mounting arm (200) is demounted from the first rotor blade port (111),
wherein a third rotor blade (108) is mounted to the first rotor blade port (111), in particular with the help of the rotor blade traverse (400) and the crane rope (300),
wherein the angle between the first and second sections (210, 220) of the mounting arm (200) is varied by the swivel hinge (230).

9. Use of a mounting arm (200) according to claim 8, wherein the hinge (230) can be electrically or hydraulically adjusted.

10. Use of a mounting arm (200) according to claim 8 or 9, wherein the first and second sections (210, 220) of the mounting arm (200) are accessible from inside.

## Revendications

1. Procédé de montage de pales de rotor (108) d'une éolienne (100), dans lequel l'éolienne (100) présente un moyeu de rotor (110) avec trois raccords de pale de rotor (111-113), sur lesquels respectivement une pale de rotor (108) est à monter, avec les étapes
de rotation du moyeu de rotor (110) jusqu'à ce que le premier raccord de pale de rotor (111) se trouve dans une position à 90° ou dans une position à 270°,
de fixation d'une première extrémité (211) d'une première section (210) d'un bras de montage (200) sur le premier raccord de pale de rotor (111), dans lequel le bras de montage (200) présente la première section (210) et une seconde section (220), lesquelles sont couplées entre elles par l'intermédiaire d'une articulation (230) de telle sorte que l'angle entre la première et la seconde section (210, 220) peut varier,
de rotation du moyeu de rotor (110) en recourant au bras de montage (200) jusqu'à ce que le deuxième raccord de pale de rotor (112) se trouve dans une position à 270° ou dans une position à 90°,
dans lequel, lors de la rotation du moyeu de rotor (110), l'angle entre la première et la seconde section (210, 220) du bras de montage (200) varie,
de levage à l'horizontale d'une première pale de rotor (108), en particulier au moyen d'une traverse de pale de rotor (400) et d'un câble de grue (300), de telle sorte qu'un montage horizontal de la première pale de rotor (108) a lieu sur le deuxième raccord de pale de rotor (112) du moyeu de rotor (110),
de rotation du moyeu de rotor (110) en recourant au bras de montage (200) jusqu'à ce que le troisième raccord de pale de rotor (113) se trouve dans une position à 270° ou dans une position à 90°,
de montage de la deuxième pale de rotor (108) sur le troisième raccord de pale de rotor (113), en particulier en recourant à une traverse de pale de rotor (400) et au câble de grue (300),
de rotation du moyeu de rotor (110) en recourant au bras de montage (200) jusqu'à ce que le premier raccord de pale de rotor (111) se trouve dans la position à 90° ou dans la position à 270°,
de démontage du bras de montage (200) du premier raccord de pale de rotor (111),
de montage d'une troisième pale de rotor (108), en particulier en recourant à la traverse de pale de rotor (400) et au câble de grue (300), sur le premier raccord de pale de rotor (111),
dans lequel l'angle entre la première et la seconde section (210, 220) du bras de montage (200) varie du fait de l'articulation rotative (230).

2. Procédé de montage de pales de rotor (108) d'une éolienne (100) selon la revendication 1, dans lequel
l'articulation rotative (230) peut tourner et peut être arrêtée dans au moins trois positions.

3. Procédé de montage de pales de rotor (108) d'une éolienne (100) selon la revendication 1, dans lequel
l'articulation rotative (230) peut être entraînée de manière électrique ou de manière hydraulique et l'articulation rotative (230) peut être arrêtée sur au moins trois positions.

4. Procédé de montage de pales de rotor (108) d'une éolienne (100) selon la revendication 1 ou 2, dans lequel
le bras de montage (200) varie à deux reprises après la fixation sur le premier raccord de pale de rotor (111) et avant le montage de la première pale de rotor (108) sur le deuxième raccord de pale de rotor (112).

5. Procédé de montage de pales de rotor (108) d'une éolienne (100) selon l'une quelconque des revendications 1 à 4, dans lequel
l'angle entre la première et la seconde section (210, 220) du bras de montage (200) varie une fois.

6. Procédé de montage de pales de rotor (108) d'une éolienne (100) selon l'une quelconque des revendications 1 à 5, dans lequel
l'angle entre la première et la seconde section (210, 220) du bras de montage (200) varie au moins une fois après le montage de la deuxième pale de rotor (108) sur le troisième raccord de pale de rotor (113).

7. Procédé de montage de pales de rotor (108) d'une éolienne (100) selon l'une quelconque des revendications 1 à 3, dans lequel
un angle entre une première et une seconde section (210, 220) du bras de montage (200) est modifié pendant la rotation du moyeu de rotor (110) en recourant au bras de montage (200) et en particulier à une traverse de pale de rotor (400).

8. Utilisation d'un bras de montage (200) pour le montage de pales de rotor (108) d'une éolienne (100) sur un moyeu de rotor (110) avec trois raccords de pale de rotor (111-113), avec
une première et une seconde section (210, 220), lesquelles sont reliées l'une à l'autre de manière à pouvoir tourner par une articulation rotative (230),
dans laquelle la première section (210) présente une première et une seconde extrémité (211, 212), dans lequel la première extrémité (211) peut être fixée sur un raccord de pale de rotor (111-113) d'un moyeu de rotor (110) d'une éolienne (100),
dans lequel une seconde extrémité (212) de la première section (210) peut être fixée sur l'articulation rotative (230),
dans lequel l'articulation (230) peut être arrêtée dans au moins trois positions,
dans lequel le moyeu de rotor (110) est tourné jusqu'à ce que le premier raccord de pale de rotor (111) se trouve dans une position à 90° ou dans une position à 270°,
dans lequel la première extrémité (211) du bras de montage (200) est fixée sur le premier raccord de pale de rotor (111),
dans lequel le moyeu de rotor (110) est tourné en recourant au bras de montage (200) jusqu'à ce que le deuxième raccord de pale de rotor (112) se trouve dans une position à 270° ou dans une position à 90°,
dans lequel, lors de la rotation du moyeu de rotor (110), l'angle entre la première et la seconde section (210, 220) du bras de montage (200) varie,
dans lequel une première pale de rotor (108) est levée à l'horizontale, en particulier au moyen d'une traverse de pale de rotor (400) et d'un câble de grue (300) de telle sorte qu'un montage horizontal de la première pale de rotor (108) a lieu sur le deuxième raccord de pale de rotor (112) du moyeu de rotor (110),
dans lequel le moyeu de rotor (110) est tourné en recourant au bras de montage (200) jusqu'à ce que le troisième raccord de pale de rotor (113) se trouve dans une position à 270° ou dans une position à 90°,
dans lequel la deuxième pale de rotor (108) est montée sur le troisième raccord de pale de rotor (113), en particulier en recourant à une traverse de pale de rotor (400) et au câble de grue (300),
dans lequel le moyeu de rotor (110) est tourné en recourant au bras de montage (200) jusqu'à ce que le premier raccord de pale de rotor (111) se trouve dans une position à 90° ou dans une position à 270°,
dans lequel le bras de montage (200) est démonté du premier raccord de pale de rotor (111),
dans lequel une troisième pale de rotor (108) est montée sur le premier raccord de pale de rotor (111) en recourant à la traverse de pale de rotor (400) et au câble de grue (300),
dans lequel l'angle entre la première et la deuxième section (210, 220) du bras de montage (200) varie du fait de l'articulation rotative (230).

9. Utilisation d'un bras de montage (200) selon la revendication 8, dans laquelle l'articulation (230) peut être ajustée de manière électrique ou de manière hydraulique.

10. Utilisation d'un bras de montage (200) selon la revendication 8 ou 9, dans laquelle il est possible d'accéder depuis l'intérieur à la première et la seconde section (210, 220) du bras de montage (200).
